Europäisches Patentamt

European Patent Office

Office européen des brevets

(19)

(11) Numéro de publication: **0 056 554**
**B1**

(12) **FASCICULE DE BREVET EUROPEEN**

(45) Date de publication du fascicule du brevet: **20.11.86**

(21) Numéro de dépôt: **81402083.0**

(22) Date de dépôt: **28.12.81**

(51) Int. Cl.⁴: **G 01 N 29/04,** G 01 N 37/00, G 01 N 29/00

(54) **Dispositif de contrôle en service de l'intégrité des soudures des structures off-shore.**

(30) Priorité: **29.12.80 FR 8027714**

(43) Date de publication de la demande:
**28.07.82 Bulletin 82/30**

(45) Mention de la délivrance du brevet:
**20.11.86 Bulletin 86/47**

(84) Etats contractants désignés:
**DE GB IT SE**

(56) Documents cités:
**DE-A-2 634 158**
**DE-A-2 831 395**
**FR-A-2 344 015**

(73) Titulaire: **Thomé, Paul**
**8 Rue Coutureau**
**F-92210 Saint Cloud (FR)**
(73) Titulaire: **Thomé, Gopal**
**8 Rue Coutureau**
**F-92210 Saint Cloud (FR)**

(72) Inventeur: **Thomé, Paul**
**8 Rue Coutureau**
**F-92210 Saint Cloud (FR)**
Inventeur: **Thomé, Gopal**
**8 Rue Coutureau**
**F-92210 Saint Cloud (FR)**

(74) Mandataire: **Thibon-Littaye, Annick**
**Cabinet A. THIBON-LITTAYE 11 rue de l'Etang**
**F-78160 Marly-le-Roi (FR)**

Courier Press, Leamington Spa, England.

EP 0 056 554 B1

## Description

La présente invention a pour objet en particulier mais non exclusivement, le contrôle en service des structures offshore utilisées pour la prospection et pour l'exploitation des gisements pétroliers; et plus spécialement certains dispositifs mécaniques adaptés aux treillis tubulaires de dimensions souvent gigantesques qui constituent la structure mécanosoudée immergée. Ces dispositifs permettront l'utilisation de méthodes de contrôle particulièrement sensibles et performantes pour l'examen systématique et automatique de l'ensemble des soudures de ces structures, dans un environnement hostile.

Les besoins énergétiques croissants, suscitent la mise en valeur des gisements pétroliers sous-marins, et donc l'apparition d'une multitude de plateformes de forage et d'exploitation qui peuvent être de dimensions colossales. Ces "usines" sont prévues pour durer une quinzaine d'années ou plus et représentent des investissement considérables. Leur dégradation en mer, progressive ou accidentelle, entraine des risques en vies humaines et peut être irrémédiable pour le matériel. Il est donc indispensable de surveiller en permanence la santé de ces structures.

Pour la plupart, ces structures sont constituées dans un treillis tubulaire entrecroisé mécano-soudé comportant des membrures principales (fûts ou piles) et des membrures secondaires (ou bracings).

Le diamètres de ces membrures varient de quelques dizaines de centimètres à plusieurs mètres. Les noeuds, où plusieurs bracings convergent sur un même fût, comprennent jusqu'à huit bracings, avec ou sans goussets raidisseurs. Les soudures se comptent par centaines, et elles coincident avec des zones pariculièrement sollicitées, susceptibles par leur nature et leur situation d'être le siège de fissurations et de défauts de fabrication.

La détection des fissures qui vont apparaître et se développer au cours du temps, par fatigue, par corrosion ètc... est actuellement faite par plongeurs. Il s'agit d'un contrôle visuel non exhaustif, assisté d'outils de mesure portés par le plongeur (magnétoscopie, ultrasons,...) Par ailleurs des tentatives se font jour d'utiliser des engins submersibles habités ou non qui se substituent à l'action du plongeur. Les bras ou manipulateurs équipant ces véhicules reproduisent les gestes du plongeur. Ces procédés sont loin d'être efficaces et ils ne sont pas satisfaisants pour l'application de méthodes précises et reproductibles de contrôle, lesquelles réclament un positionnement ferme et précis à quelques millimètres près, des sondes de mesure.

De plus les plongeurs comme les véhicules se perdent dans la multitude des membrures, des noeuds et des soudures et les confusions sont fréquentes.

Lors de son installation une plateforme est pourvue d'une série de jauges de mesures destinées soit à contrôler les opérations de mise en place, soit à mesurer les contraintes auxquelles est soumise la plateform et à traiter ces mesures avec des modèles mathématiques. Mais cette instrumentation a une durée de vie limitée, et il en sera de même pour toutes sondes de contrôle destinées à déceler les fissures. Par leur quantité et leur localisation, la maintenance de ces instrumentations fixées sur les membrures devient rapidement impossible. Les méthodes actuelles ne permettent donc pas l'inspection en service, laquelle exige une reproductibilité des mesures ainsi que la transcription des données expérimentales: identification précise de la position du défaut, de ses dimensions, de son orientation etc.

Pour diminuer les difficultés technologiques associées à un contrôle non destructif par sondes ponctuelles (venant à proximité immédiate du défaut), on s'efforce actuellement d'utiliser des méthodes de contrôle indirectes, tel qu'un diagnostic par émission acoustique (basé sur l'écoute du bruit émis par l'évolution d'une fissure), ou une analyse spectrale des vibrations de la structure en des points précis (excitation forcée ou vibrations naturelles). En effet, il est plus rapide et plus simple de placer une sonde et un excitateur sur une membrure que de faire un examen par balayage mécanique précis de la soudure par une sonde. Evidemment les sensibilités des méthodes n'ont rien de comparable. L'émission acoustique, comme de contrôle, qui ne s'appliquent qu'à des géométries simples et à des opérations ponctuelles.

Les dispositifs mécaniques objets de l'invention ont pour but de permettre la mise en oeuvre de méthodes de contrôle direct, complet, à distance, précises, reproductibles, rapides, sans recourir à l'intervention de plongeurs. Ils sont particulièrement destinés à l'examen des soudures des noeuds. Ils ont pour fonction de positionner fermement et d'orienter des sondes de mesure de façon précise à quelques millimètres près par rapport au cordon de soudure (balayage de la soudure), ils ont également pour fonction d'assurer l'installation rapide et la fixation rigide du système de contrôle sur les membrures.

Les dispositifs de contrôle des soudures d'assemblage d'éléments tubulaires comportent de manière classique des sondes munies de palpeurs qui sont placées, soit manuellement soit éventuellement mécaniquement à proximité immédiate de la soudure, de manière à pouvoir détecter d'éventuelles fissure. dans ces soudures.

En particulier on a décrit dans le brevet DE—A—2 634 158 un dispositif de tests à ultrasons des parties externes des joints d'assemblage de tube, en particulier des tubes utilisés dans les réacteurs de centrales nucléaires, comportant une partie fixe placée transversalement sur une partie du tube à contrôler, une partie mobile supportée par la partie fixe, un chariot de transport supportant des palpeurs, déplaçable dans une direction parallèle au tube de support de la partie fixe. Dans le document précité, on se contente de tester la soudure de liaison de deux tubes sur un plan précis dans une direction longitudinale, mais il n'est pas possible de faire déplacer le système de test dans un mouvement orbital autour du tube qui supporte le système.

Dans le document FR—A—2 344 015 on a décrit un dispositif destiné aux examens par ultrasons des tubes comportant un bâti annulaire qui peut être centré sur le pourtour extérieur du tube et un dispositif palpeur à ultrasons monté sur un chariot de transport se déplaçant sur le pourtour circulaire du tube. Le palpeur permet de vérifier les éventuelles fissures situées sur un tube mais il est limité dans un déplacement parallèle autour de la surface cylindrique du tube à tester. Il ne peut s'appliquer dans le cas où l'on désire vérifier les soudures de liaison de deux tubes orientés l'un vis-à-vis de l'autre dans deux directions non coaxiales.

Le document DE—A—2 831 385 nous montre un dispositif à examen de fissures sur des surfaces courbées comportant une partie mobile constituée d'un bras levier articulé supportant des palpeurs. Le bras levier est réglable dans le sens longitudinal et supporte, pour une meilleure conduite sur la surface examinée, un levier orientable muni d'un bras avec un galet sur son extrémité libre. Ce dispositif a également l'inconvénient de ne pouvoir tester la surface du tube dans un mouvement orbital autour de celui-ci.

L'invention vise à améliorer les performances des matériels connus dans les dispositifs de contrôle des soudures d'assemblage des tubes et à permettre en particulier de réaliser ces tests dans un mouvement orbital autour de la soudure reliant deux tubes, dans le cas où les tubes sont orientés les uns par rapport aux autres dans des directions non coaxiales.

Dans ce but, l'invention propose un dispositif de contrôle automatique de soudures d'assemblages d'éléments tubulaires, comportant un bâti fixe à monter sur l'un desdits éléments tubulaires des moyens de fixation dudit bâti sur ledit élément tubulaire transversalement, ledit bâti s'alignant coaxialement avec l'axe théorique dudit élément, des moyens de détection de fissures par déplacement de palpeurs dans un mouvement orbital autour de la surface externe de l'élément et dans un mouvement longitudinal par rapport à l'axe théorique dudit élément à proximité de la soudure, caractérisé en ce que le dispositif comporte une partie mobile en forme de cage à écureuil ouverte en "U", se déplaçant à l'intérieur du bâti fixe, ledit bâti fixe étant constitué par une forme de cage à écureuil ouverte en "U", parallèlement à l'axe dudit bâti fixe par l'intermédiaire de moyens de roulement ouverts, la partie mobile étant réglable radialement par rapport à l'axe dudit bâti, lesdits moyens de détection constitués d'un fourreau supporté par ladite partie mobile, un bras monté coulissant à l'intérieur dudit fourreau, une tête de mesure orientable portée par le bras par l'intermédiaire d'un mécanisme à plusieurs degrés de liberté et les palpeurs fixés à ladite tête et adaptés pour être maintenus en contact avec les éléments à contrôler.

La forme particulière du bâti fixe et du bâti mobile en cage à écureuil ouverte en "U" permet un positionnement aisé du bâti fixe sur l'élément tubulaire et permet également une rotation totale des palpeurs autour du cordon de soudure des deux éléments tubulaires, cette rotation étant réalisée par les moyens de roulement ouverts, montés sur le bâti fixe. On peut donc réaliser un examen minutieux du cordon de soudure d'un élément tubulaire fixé avec une orientation quelconque sur un autre élément tubulaire par un mouvement orbital autour de la surface externe de l'élément.

Selon une caractéristique secondaire de l'invention, le dispositif comporte des moyens pour programmer la position de l'extrémité du bras de manière à suivre une courbe calculée à l'intersection théorique des éléments tubulaires dont on veut contrôler la soudure, la tête étant adaptée pour appliquer les palpeurs sur les éléments tubulaires portant le dispositif.

Les figures 1a et 1b, représentent très schématiquement respectivement en vue de côté et en vue par dessus le procédé de contrôle des soudures;

Les figures 2 et 3 représentent en vue par dessus et en vue de côté les moyens de montage du scanner sur les membrures;

Les figures 4, 4a et 4b représentent respectivement en coupe selon la ligne IV—IV de la figure 2, une coupe selon la ligne I—I de la figure 4, et une coupe selon la ligne II—II de la figure 4;

La figure 5 représente une vue du même montage après rotation de 90 degrés de la partie mobile;

Les figures 6 et 7 représentent respectivement en élévation et en vue par dessus le bras portant les capteurs dans un premier mode de réalisation;

La figure 8 représente schématiquement le scanner et ses moyens de support;

Les figures 9 et 9a représentent la main d'un palpeur dans un second mode de réalisation;

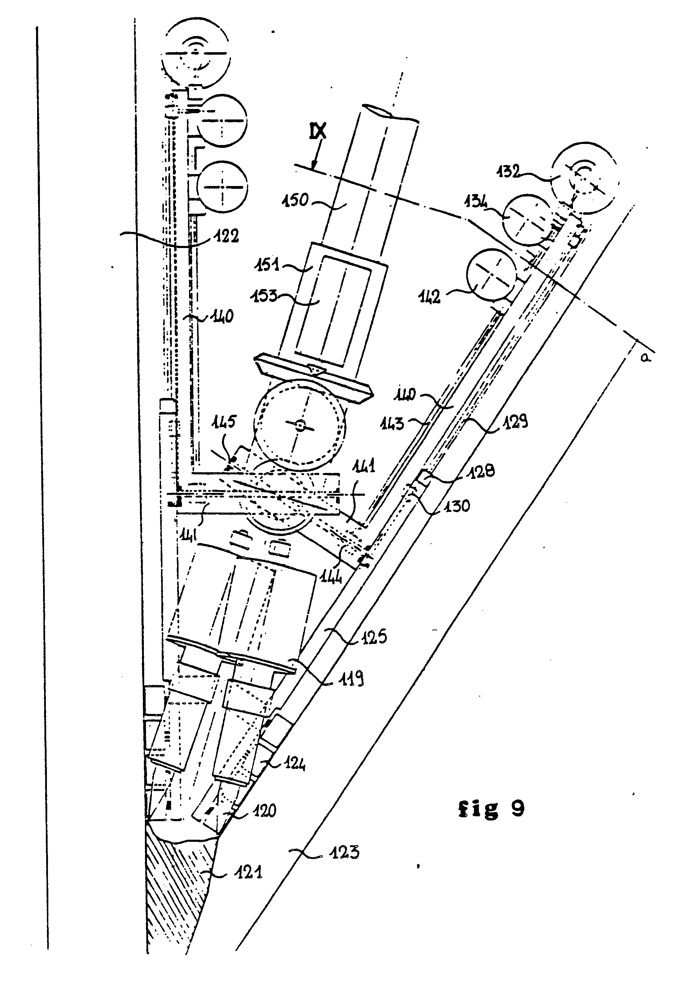

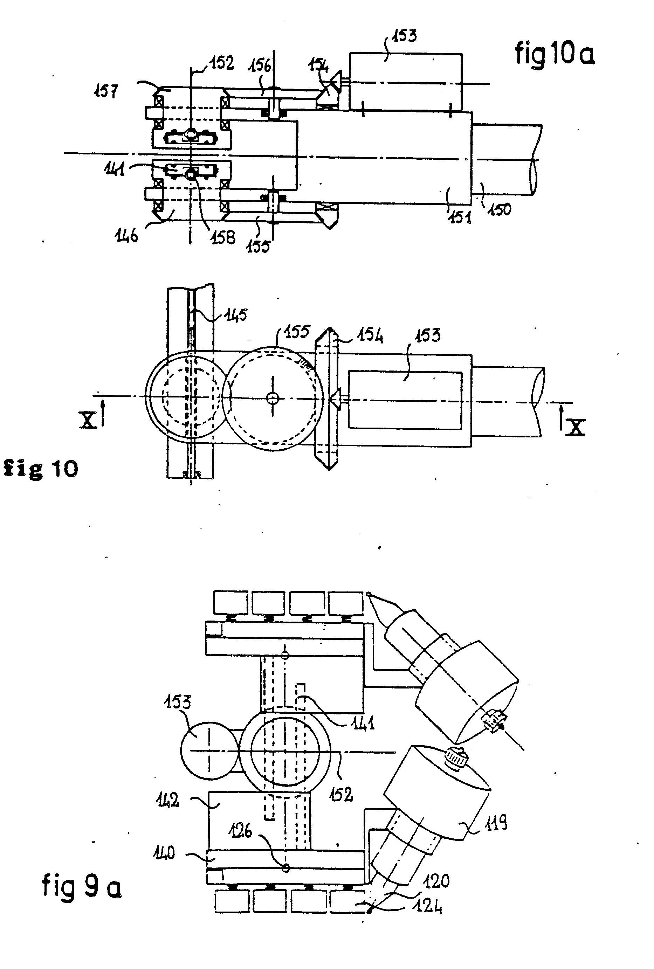

Les figures 9 et 9a, une vue de la tête de contrôle respectivement en élévation et en bout selon la direction IX de la figure 9;

Les figures 10 et 10a représentent les moyens de déplacement des sondes à ultrasons;

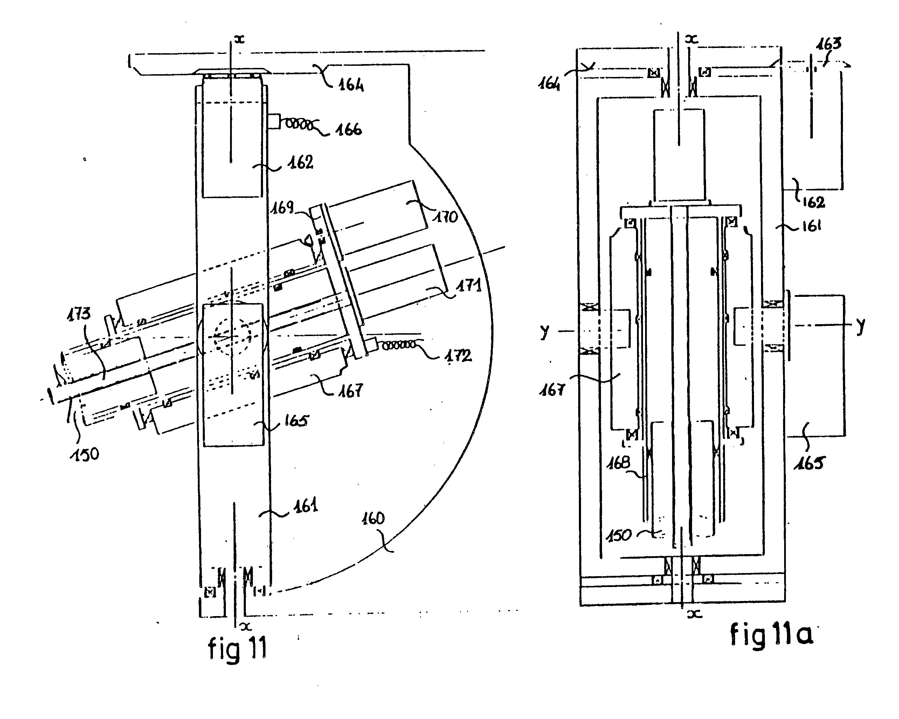

Les figures 11 et 11a représentent l'extrémité du bras dans le second mode de réalisation.

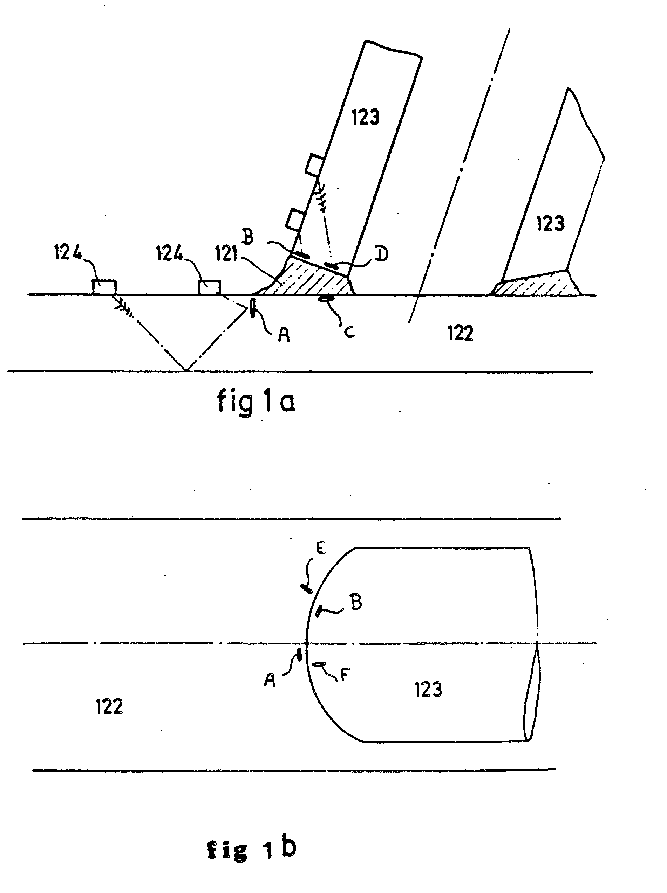

Les fissures qui seront détectées sont représentées dans la figure 1.

Seront aisément détectées et mesurées les fissures classiques de fatigue (A) qui sont perpendiculaires à la surface de la membrure 122 et (B) parallèles au cordon 121; celles qui résultent d'un défaut de lamination ou d'un collage (C) sur la membrure principale 122 d'un collage (D) sur la membrure secondaire 123 et qui seront détectées par des palpeurs d'angle sur la membrure secondaire; et toutes celles qui séloignent du cordon dans n'importe quelle direction (E, F).

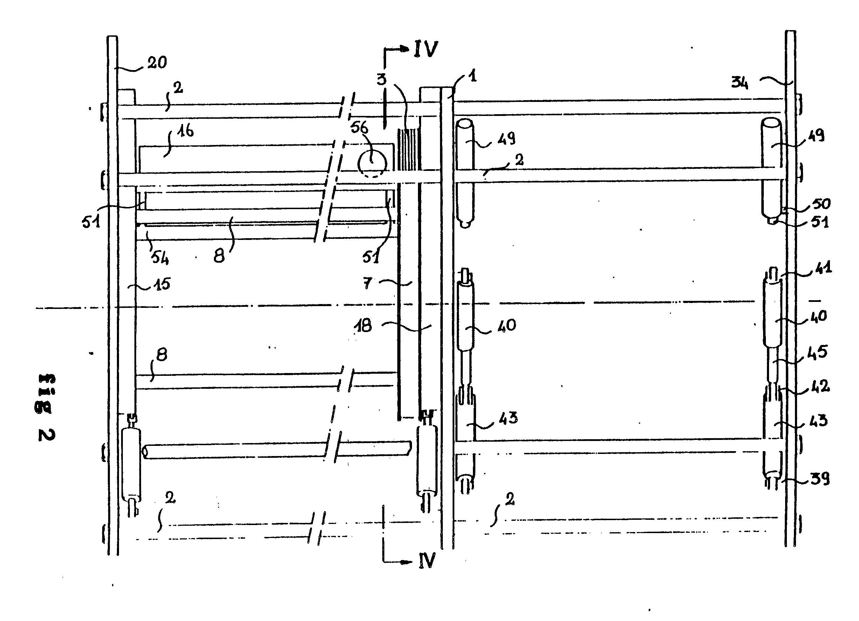

Le scanner au dispositif à balayage est représenté sur les figures 2, 3, 4, 5.

La poutre fixe comprend trois plaques (ou flasques) en U. Un flasque avant 20, un flasque intermédiaire 1 et un flasque arrière 34; ils sont reliés entre eux par des tirants 2 qui confèrent à l'ensemble fixe sa rigidité. Sur la face arrière du flasque intermédiaire et sur la face avant du flasque arrière sont fixés des vérins (mors de serrage), escamotés lors de la mise en place ou de retrait du scanner, qui sont actionnés pour saisir la membrure lors du contrôle. La figure 2 est une vue en plan du scanner qui est venu saisir horizontalement une membrure.

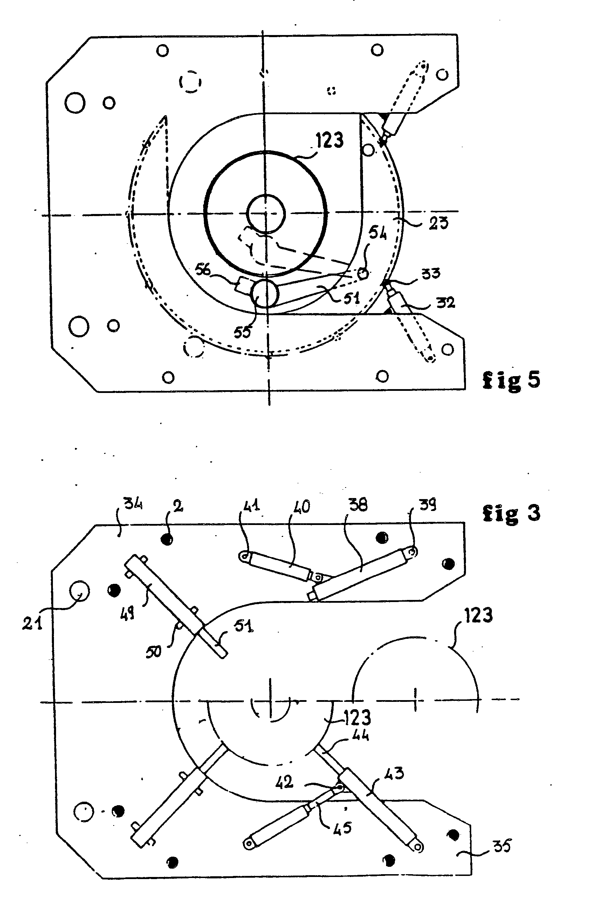

La figure 3 représente la face avant du flasque arrière 34. La face arrière du flasque intermédiaire 1 est similaire, et contribue à assurer une prise ferme sur la membrure. Sur la figure 3 on voit comment le scanner est placé sur la membrure et comment il va y être serré par les mors de serrage 51.

Les vérins 38 situés sur la fourche 35 sont en position escamotée lorsque le scanner va être engagé sur la membrure 123. Ces vérins pivotent autour d'un axe 39; ce mouvement d'esquive est commandé par le vérin 40 lié par l'articulation 42 au vérin 38, pivotant autour de 41. Lorsque le scanner est complètement engage sur la membrure 123, ces vérins 38 pivotent en 43 par la sortie de la tige 45, le vérin se ferme alors en 44 sur la membrure. Au fond du flasque en U les vérins 49 fixés par les chapes 50 complètent le serrage par leurs mors 51. Les ouvertures 21 situées à la base de U, dans les flasques avant et arrière, sont destinées à permettre l'accrochage et la manutention du scanner par un système de levage. La face arrière du flasque 20 et la face avant du flasque intermédiaire 1 possèdent des roulements sur lesquels va tourner la partie mobile. Ceci est illustré sur les figures 2, 4, 5.

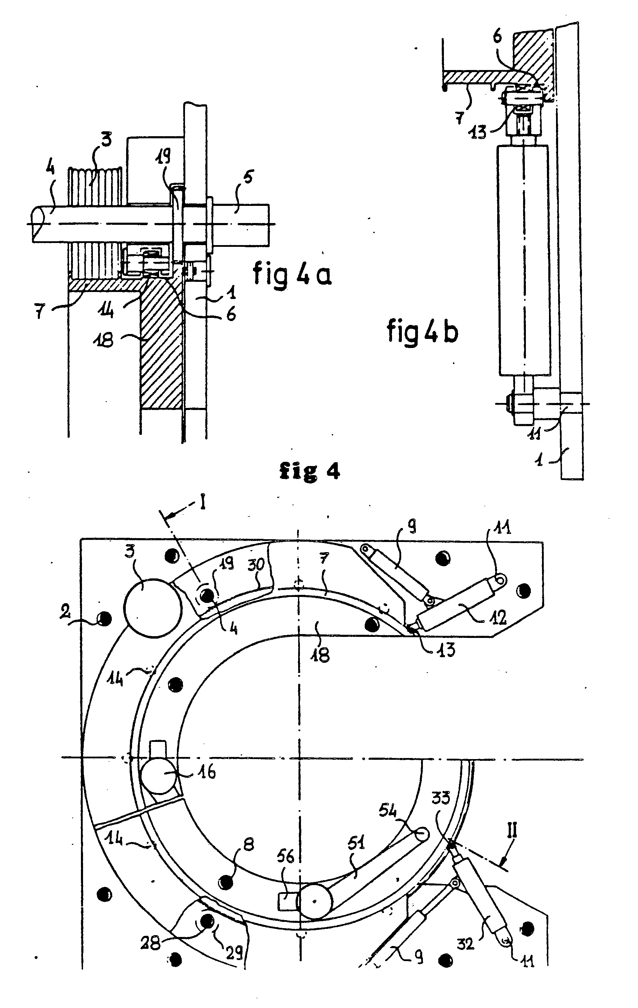

La figure 4 correspond à la vue selon IV—IV de la figure 2. Le flasque intermédiaire 1, traversé par les tirants 2, porte aux extrémités de sa fourche des éléments 12 éclipsables portant sur leur extrémité des rouleaux 13; le vérin 9 fait pivoter 12 autour de l'axe 11. Après mise en place du scanner, ces éléments pivotent en 32 et les rouleaux viennent en 33 compléter le chemif de guidage constitué par les rouleaux 14.

La partie mobile du scanner est une "cage d'écureuil" en U. Elle comporte deux plateaux circulaires en U, 15 et 18, qui tournent respectivement sur les rouleaux 14 des flasques 20 et 1; et qui sont reliés par des tirants 8; ils roulent par leur face cylindrique 6 sur les rouleaux 14.

Ils sont entrainés simultanément en rotation par un moteur 5 fixé sur l commandant un arbre 4 qui attaque une crémaillère 30 par le pignon 19 (figure 4a). Un second entrainement 28 couplé au premier assure la continuité de la rotation de la partie mobile en dépit de l'ouverture en U; par le pignon d'entraînement 29 qui attaque également la crémaillère 30. Cette cage d'écureuil porte un fourreau 16 éclipsable, parallèle aux tirants 8. Ce fourreau est tenu par les tiges 51 fixées sur l'axe 54. L'éclipsage est commandé par un moteur non représenté, fixé sur 18. Dans ce fourreau est placé le bras de contrôle qui sera décrit plus loin.

Un tambour 7, support de câbles est solidaire de 18. Les câbles de mesure, ceux d'alimentation électrique, d'alimentation hydraulique etc. qui vont de la partie fixe à la partie mobile, sont portés par un enrouleur 3 qui tourne en même temps que 7 de façon à tendre les câbles. Un connecteur circulaire assure la liaison des câbles d'alimentation en fluide, en électricité ainsi que la connexion des câbles d'instrumentation etc . . ., entre la partie fixe et la partie mobile.

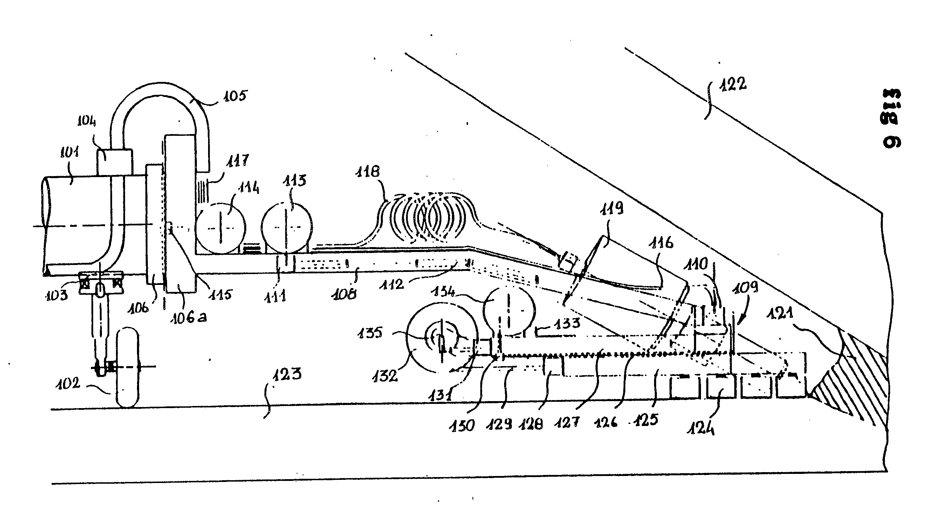

Sur la figure 5 on a indiqué la position en 23 des plateaux après une rotation de 90 degrés, alors que l'on est en train de contrôler la membrure 123. Le plateau en U est engagé sur les rouleaux 33 de 32.

A l'intérieur du fourreau 55 se trouve le bras de contrôle. L'orientation de ce bras est commandée par un moteur 56 de telle sorte que ce bras soit toujours directement en regard de la membrure en dépit de la rotation du fourreau sur l'axe 54. Lors de l'inspection, ce bras s'allonge en dehors du fourreau en asservissement à la position angulaire de la partie mobile. Un moteur pas à pas et une transmission situés à l'intérieur du fourreau assurent ce mouvement.

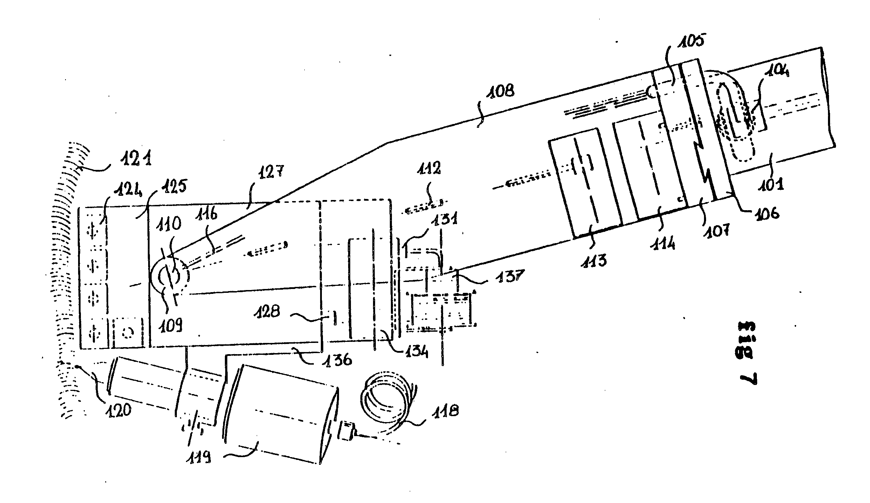

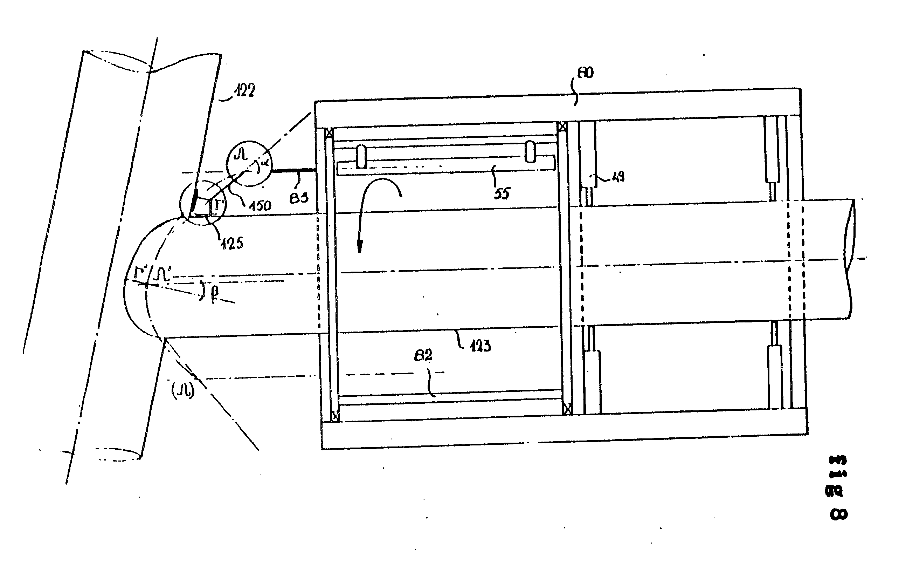

Deux dispositifs sont destinés à déplacer les sondes au voisinage immédiat du cordon, sur les membrures. Selon le premier, représenté sur les figures 6 et 7, les sondes à ultrasons sont déplacées exclusivement sur la surface de la membrure sur laquelle est placé le scanner. La figure 6 représente en élévation, l'extrémité du bras et l'intersection des membrures. La figure 7 est une vue en plan.

L'extrémité 101 du bras est soutenue par une roue 102, orientable montée sur ressort ou amortisseur en 103. Les divers câbles 105 d'instrumentation et d'alimentation électrique, voire d'alimentation en fluides. arrivent à la prise de raccordement 104. Ce bras est parallèle à la membrure secondaire 123 (secondaire parce que totalement interceptée par la membrure primaire 122) sont il s'agit de contrôler la soudure 121.

A l'extrémité 101 du bras est fixée une table à glissière 107 qui fait la liaison avec le poignet 108. Cette table à glissière possède un plateau 106 fixé sur le bras et un autre 106 afixé sur le poignet 108. Les mouvements sont dirigés vers l'axe duscanner (radialement) et ils sont commandés et programmés par le moteur pas à pas 114 et sa transmission 115. Les câbles d'alimentation sont fixés en 117 sur le plateau 106a. Par analogie avec la physiologie humaine, les organes placés au bout du bras seront appelés respectivement poignet 108 et main 109.

La "main" 109 est rattachée à l'extrémité du poignet 108. Elle tourne autour d'un axe dirigé radialement. Cette rotation est commandée et programmée par le moteur pas à pas 113 avec sa transmission 111 et 112 qui vient attaquer une couronne non représentée portée par l'axe de rotation. Les câbles d'alimentation et d'instrumentation 116 portés par le poignet viennent sur un collecteur 110 cylindrique, porté par l'axe.

La main comporte une table à glissire parallèle à la membrure 123 (parallèle à l'axe du scanner). Elle est en permanence orientée perpendiculairement au cordon de soudure par rotation du plateau supérieur 127 commandée par 113. Elle porte un moteur 134 avec sa prise de raccordement électrique 133, qui, par une transmission 130 attaque une vis sans fin 126; ce qui assure le déplacement du plateau inférieur 125 ou tête de mesure. Sous ce plateau coulissant 125 et en son extrémité sont situés les transducteurs à ultrasons 124. Les câbles d'instrumentation de ces transducteurs sont repris par la borne 128 et le raccord câble 129. Ces câbles 129 sont tendus en permanence par le tambour enrouler 132 fixé par la chape 135 sur le plateau supérieur. Le collecteur électrique tournant 137 est raccordé au plateau supérieur par la prise 131. Un suiveur de joint 119 appuie en permanence son doigt suiveur 120 le long du cordon de soudure. Il est fixé par 136 sur le plateau inférieur. Lors de la rotation orbitale du bras, le doigt 120 s'écarte de sa position axiale sur 119. Les informations sont immédiatement retransmises par les câbles 118 au niveau des moteurs 114 et 134 qui commandent respectivement la position radiale de la main (c'est-à-dire qui contrôle l'appui des palpeurs sur la membrure) et l'avancée des palpeurs jusqu'au voisinage immédiat du cordon par allongement ou retrait de la main. Ce feedback qui replace le doigt 120 en position d'équilibre dans l'axe du suiveur de joint 119, assure le suivi du joint par les palpeurs. Par contre sont asservies à la position angulaire du bras, d'une partie poignet (par programmation de l'allongement du bras téléscopique); d'autre par l'orientation de la main par rapport au bras (par programmation du moteur 113). Cet asservissement résulte d'un calcul théorique fait en commande numérique du scanner à partir de l'intersection théorique des deux cylindres représentant les membrures. En effet, en chaque point de cette intersection correspondant un seul point sur le cylindre (ou membrure secondaire) situé à une distance constante (longueur de la "main") prédéterminée dans le plan perpendiculaire à la tangente à l'intersection. Autrement dit, dans le cas d'un assemblage mécanique parfait, les programmations de l'allongement du bras et de l'orientation de la main suffiraient à assurer un positionnement mécaniquement correct des palpeurs. Les mouvements le long des deux tables à glissière sont essentiellement destinés à absorber les irrégularités de fabrication, et la connaissance de ces irrégularités est fournie par le suiveur de joint 119 qui commande les corrections nécessaires.

Le second dispositif décrit ci-dessous permet le contrôle simultané des deux côtés du cordon à partir de la surface de chacune des membrures (principale et secondaire). Il est représenté sur les figures 8, 9, 10, 11. Sur la figure 8 est schématisé le scanner. La partie fixe 80 du scanner est fixée par les vérins 49 sur la membrure secondaire 123. Le rotor en U 82, possède un fourreau escamotable 55 d'où émerge le bras 83. A l'extrémité Ω du bras est placée une articulation d'où par un levier 150 de longueur réglable. Sur ce levier le point T décrit dans l'espace une courbe programmée à l'avance à partir des géométries théoriques du noeud. Ce levier est normal à la tangente uu cordon de soudure au point soumis au contrôle; c'est la bissectrice des tangentes aux membrures. Du point T partent deux têtes d'exploration appliquées sur chacune des membrures. Le point Ω décrit une courbe (Ω), calculée, sur un cylindre coaxiale à 123; il est en Ω lorsque le plan sécant est de front sur la figure. L longueur Ω T du levier est également programmée pour que les têtes d'exploration soient plaquées sur la position théorique des membrures, il en est de même de l'angle formé entre les deux têtes d'inspection.

A l'extrémite 160 du bras (figure 11) est fixé un cardan défini par les deux axes orthogonaux de rotation Xx, Yy. L'axe Xx est perpendiculaire à la membrure secondaire. Sur ce cardan est fixé un levier 150 téléscopique. L'ensemble des commandes est représenté sur la figure 11. L'armature 161 du cardan pivote sur l'axe Xx, ce mouvement par le moteur 162 sont le pignon moteur 163 roule sur une denture circulaire 164 de 160. L'inclinaison du levier 150 est commandée par le moteur 165 solidaire de 161. Les alimentations électriques sont symbolisées par 166.

Pour une inclinaison donnée; la position du levier est définie par deux paramètres: son allongement et son orientation par rapport à son axe. Ceci est réalisé de la façon suivante. L'inclinaison est définie par la chemise 167 qui pivote autour de Yy. A l'intérieur de cette chemise est fixée une colonne 168 avec un flasque 169 portant des moteurs 170 d'orientation et 171 d'allongement du levier. Les alimentations électriques ainsi que les câbles d'instrumentation sont symbolisés par 172 lié à 169. Le motoréducteur 170 possède un pignon moteur qui attaque une crémaillère située sur 167. Le motoréducteur 171 commande une vis sans fin 173 qui entraîne la sortie du levier 150.

De coude, part un levier téléscopique 150 allant jusqu'au poignet 151. A l'extrémité de celui-ci est fixé un axe 152 (figures 8, 9, 10) autour duquel pivotent d'un angle égal et en sense contraire les deux mains de palpage (sur chaque membrure). Le pivotement des mains est commandé par le moteur 153 attaquant une couronne 154 coaxiale à 151, et qui par le renvoi des pignons 155 et 156 fait tourner en sens contraire les masses 146 et 157 (figure 10). Les mains comportent un plateau supérieur 140, plan, qui est positionné parallèlement à la membrure contrôlée; ce plateau est prolongé d'un bras 141 perpendiculaire qui coulisse à l'intérieur de la masse pivot 146. Cette translation est commandée par le moteur 142, par l'axe 143 et la transmission 144 qui fait tourner une vis sans fin 145 solidaire de 141; à l'intérieur de 146 de trouve, prisonnier, un écrou 158 traversé par la vis 145. Sur 140 sont situés un moteur 134 et un tambour 132 ayant un rôle identique à ce qui a été décrit dans l'exemple précédent. La main comporte également un plateau inférieur 125 coulissant, avec en son extrémité des palpeurs 124 destinés au contrôle par ultrasons, et un suiveur de joint 119 avec son doigt de contact 120. La translation de 125 commandée par le moteur 134 et par les transmissions 129 et 130; un tambour 132 met en tension les câbles de mesure 129 reliés à 125 par la prise 128.

Par ailleurs, préalablement au contrôle, il est nécessaire de débarrassée les surfaces de toutes leurs concrétions, algues, calamine etc... Pour ce faire on utilisera un dispositif similaire à ceux qui viennent d'être décrits, en adaptant au poignet un outil portatif classique tel que brosse métallique rotative, buses de jets d'eau sous haute pression etc...

L'ensemble de ces dispositifs permet le contrôle automatique des soudures des noeuds des plate-formes off-shore. Les systèmes de mise en place du scanner sur les membrures dépendent essentiellement du dessin des plate-formes et de leur complexité: ils ne font pas l'objet du présent brevet.

## Revendications

1. Dispositif de contrôle automatique de soudures d'assemblages d'éléments tubulaires (122, 123) comportant un bâti fixe (80) à monter sur l'un desdits éléments tubulaires (123), des moyens de fixation (49) dudit bâti sur ledit élément tubulaire transversalement, ledit bâti s'alignant coaxialement avec l'axe théorique dudit élément, des moyens de détection de fissures par déplacement de palpeurs (124) dans un mouvement orbital autour de la surface externe de l'élément et dans un mouvement longitudinal par rapport à l'axe théorique dudit élément à proximité de la soudure, caractérisé en ce que le dispositif comporte une partie mobile (82) en forme de cage en écureuil ouverte en "U" se déplaçant à l'intérieur du bâti fixe (80), ledit bâti fixe étant constitué par une forme de cage á écureuil ouverte en "U", parallèlement à l'axe dudit bâti fixe par l'intermédiaire de moyens de roulement ouverts (29), ladite partie mobile étant réglable radialement par rapport à l'axe dudit bâti, lesdits moyens de détection constitués d'un fourreau (55) supporté par ladite partie mobile, un bras (83) monté coulissant à l'intérieur dudit fourreau (55), une tête de mesure (125) orientable portée par le bras par l'intermédiaire d'un mécanisme (108) à plusieurs degrés de liberté, et les palpeurs (124) fixés à ladite tête et adaptés pour être maintenus en contact avec les éléments à contrôler.

2. Dispositif selon la revendication 1, caractérisé en ce qu'il comporte des moyens pour programmer la position de l'extrémité du bras (83) de manière à suivre une courbe calculée à l'intersection théorique des éléments tubulaires dont on peut contrôler la soudure, la tête de mesure (125) étant adaptée pour appliquer les palpeurs sur lesdits éléments tubulaires portant le dispositif.

3. Dispositif selon la revendication 1, caractérisé en ce que pour contrôler les soudures d'intersection entre deux éléments tubulaires, un ensemble de deux têtes est disposé à l'extrémité du bras (161), chacune des têtes tournant en sens inverse de l'autre et l'extrémité du bras (161) suivant une courbe théorique définie par l'intersection entre le cylindre généré par le mouvement orbital du fourreau (55) et la bissectrice entre les tangentes aux éléments tubulaires à contrôler, les mouvements du bras dépendant de moyens placés sous la dépendance d'un calculateur.

4. Dispositif selon l'une des revendications 1 ou 2, caractérisé en ce que la tête de mesure (125) est supportée par une table à mouvements croisés comprenant deux plateaux (106 et 106a), se déplaçant respectivement selon la direction du bras et normalement à cette direction, ladite table (107) pivotant sur elle-même pour rester face à la soudure, la tête (125) étant mobile en deux directions de façon à épouser les irrégularités de la soudure.

5. Dispositif selon l'une quelconque des revendications précédentes, caractérisé en ce qu'un suiveur de joint (119) est monté sur la tête de mesure (125) pour ajuster en permanence la position des sondes (124) à une distance précise et constante du cordon de soudure.

6. Dispositif selon la revendication 3, caractérisé en ce qu'il comprend un poignet (108) orienté vers le cordon de soudure, selon la direction de la bissectrice des tangentes des deux éléments tubulaires concourants, les deux têtes de mesure (125) étant montées sur des platines (140) respectivement parallèles aux tangentes à chacun des éléments tubulaires et dont l'inclinaison sur la bissectrice varie au fur et à mesure du mouvement orbital du bras, les platines (140) assurant le déplacement longitudinal des sondes (124) pour les amener au contact du cordon de soudure.

7. Dispositif selon la revendication 6, caractérisé en ce que le déplacement croisé de la platine porte-sondes (125) est asservi aux indications d'un suiveur de joint (119) pour compenser les irrégulacités de la soudure, le plan de section droite défini par l'axe du poignet (108) et celui des platines (140) est confondu avec le plan perpendiculaire à la tangente au cordon de soudure au point considéré.

8. Dispositif selon l'une quelconque des revendications précédentes, caractérisé en ce que des moyens de nettoyage sont montés sur au moins une platine avant les opérations de contrôle.

## Patentansprüche

1. Automatische Prüfvorrichtung für Schweißverbindungen von rohrförmigen Bauteilen (122, 123). Diese Vorrichtung umfaßt ein feststehendes Gestell (80), des auf einem der röhrenförmigen Bauteile (123) montiert wird, Befestigungsmittel (49), mit denen das Gestell auf dem querstehenden röhrenförmigen Bauteil befestigt wird, das Gestell wird dabel koaxial zur theoretischen Achse des Bauteil ausgerichtet, Rißprüfungstastköpfe (124), die mit einer kreißförmigen Bewegung um die Außenfläche des Bauteils und längs der theoretischen Achse des Bauteils über die geschweißtenFläche vorgeschoben werden. Zur Vorrichtung gehört ein U-förmiger, offener Käfig (82), der sich innerhalb des feststehenden Gestelle (80) bewegen läßt. Das feststehende Gestell besteht ebenfalls aus einem offenen U-förmigen Käfig. Der Vorschub des inneren, beweglichen Käfigs erfolgt mithlife von offenen Rollenlogern (29) parallel zur theoretischen Achse des feststehenden Gestells. Der bewegliche Käfig kann radial zur Achse des feststehenden Gestells eingestellt werden. Die Prüfvorrichtung befindet sich an einer Hülse (55), die an dem beweglichen Käfig befestigt ist. Innerhalb der Hülse (55) gleitet ein Arm (83). An diesem Arm ist ein Mechanismus (108) angebracht, mit dem der orientierbare Meßkopf in verschiedenen Abständen befestigt werden kann. Die Tastköpfe (124) sind an diesem Meßkopf befestigt und so gestaltet, daß sie mit den zu prüfenden Bauteilen in Kontakt bleiben.

2. Vorrichtung gemäß Anspruch 1, jedoch ausgestattet mit Mitteln, mit denen die Position der Armspitze (83) so programmiert werden kann, daß sie einer Kurve folgt, die auf den Schnittpunkt der Achsen der zu prüfenden Rohre berechnet ist. Der Meßkopf (125) ist dabei so eingestellt, daß er die Tastküpfe auf die Rohre drückt.

3. Vorrichtung gemäß Anspruch 1, jedoch zur Prüfung der Schweißverbindungen an den Schnittpunkten zwischen den beiden Rohren. Bei dieser Vorrichtung sind am Ende des Armes (161) zwei Tastköpfe angebracht, die sich zueinander in entgegengesetzter Richtung bewegen. Das Ende des Armes folgt einer theoretischen Kurve, die sich aus dem Schnittpunkt des durch die Bewegung der Hülse gedachten Zylinders mit der Winkelhalbierenden zwischen den Tangenten der zu prüfenden Rohre ergibt. Die Bewegungen des Armes werden dabei mit entsprechenden Mitteln durch einen Rechner gesteuert.

4. Vorrichtung gemäß einem der Ansprüche 1 oder 2. Diese Vorrichtung unterscheidet sich jedoch dadurch, daß der Meßkopf von einer kreuzförmig beweglichen Tafel getragen wird, die zwei Platten umfaßt (106 und 106a), die sich jeweils entsprechend der Richtung des Armes und der normalen Richtung bewegen. Die Tafel (107) ist drehbar gelagert, so daß sie der geschweißten fläche Ammer gegenübersteht; der Meßkopf (125) ist in zwei Richtungen schwenkbar, so daß er sich den Unebenhelten der Schweiß-verbindung anpaßt.

5. Vorrichtung gemäß einem der vorstehenden Ansprüche, jedoch dadurch gekennzeichnet, daß am Meßkopf (125) ein Abstandsprüfkopf angebracht ist, mit dem die Position der Sonden (124) ständig auf einen genauen gleichbleibenden Abstand zur Schweißnaht eingestellt wird.

6. Vorrichtung gemäß Anspruch 3, jedoch dadurch gekennzeichnet, daß sie zur Schweißnaht hin ein Gelenk (108) hat, dessen Ausrichtung gemäß der Richtung der Winkelhalbierenden der Tangenten der belden aufeinanderzulaufenden Rohre bestimmt wird. Die belden Meßköpfe (125) sind auf Platinen (140) befestigt, die jeweils parallel zu den Tangenten an jedem der rohr befestigt sind und deren Neigung nuf der Winkel-halbierenden sich anhängig von der kreinförmigen Bewegung des Armes verändert. Die Platinen (140) sichern dabei den Längsvorschub der Sonden (124), so daß diese ständig mit der Schweißnaht Kontakt halten.

7. Vorrichtung gemäß Anspruch 6, jedoch dadurch gekennzeichnet, daß der kreuzweise Vorschub der Sondenträgerplatine (125) durch einen Abstandprüfkopf gesteuert wird, um Unebenheiten der Schweißnaht auszugleichen. Die gerade Schnittebene, die sich aus der Achse des Gelenke (108) und der der Platinen (148) ergibt, wird mit dem senkrechten Schnitt zur Inngente an dem betreffenden Punkt der Schweißnaht zusammengebracht.

8. Vorrichtung gemäß einem der vorstehenden Ansprüch, jedoch dadurch gekennzeichnet, daß vor den Prüfvorgängen Reinigungsvorrichtungen auf mindestens einer Platine montiert werden.

## Claims

1. Automatic weld-testing device for assemblies of tubular members (122, 123) comprising a fixed frame (80) for mounting on one of said tubular members (123), fastening means (49) for fixing said frame transversely on said tubular member, said frame being aligned coaxially with the theoretical axis of said member, means for detecting cracks by the movement of feelers (124) in an orbital movement around the outer surface of the member and in a longitudinal movement with respect to the theoretical axis of said member close to the weld, characterized in that the device comprises an open "U"-shaped squirrel cage movable part moving inside the fixed frame (80), said fixed frame being constituted by an open "U"-shaped squirrel cage, parallel to the axis of said fixed frame through open roller track means (29), said movable part being radially adjustable with respect to the axis of said frame, said detection means constituted by a sleeve (55) supported by said movable part, an arm (83) slidably mounted inside said sleeve (55), an orientable measuring head (125) borne by the arm through a mechanism (108) with several degrees of freedom, and feelers (124) fixed to said head and adapted to be held in contact with the members to be checked.

2. Device according to Claim 1, characterized in that it comprises means for programming the position of the end of the arm (83) so as to follow a curve calculated from the theoretical intersection of the tubular members whose weld could be chcked, the measuring head (125) being adapted to apply the feelers to said tubular members bearing the device.

3. Device according to Claim 1, characterized in that to check the welds of intersection between two tubular members, a set of two heads is arranged at the end of the arm (161), each of the heads rotating in reverse direction from the other and the end of the arm (161) following a theoretical curve defined by the intersection between the cylinder generated by the orbital movement of the sleeve (55) and the bisector between the tangents to the tubular members to be checked, the movements of the arms depending on means placed under the dependence of a calculator.

4. Device according to one of Claims 1 or 2, characterized in that the measuring head (125) is supported by a cross motion table comprising two plates (106 and 106a), moving respectively in the direction of the arm and normally to this direction, said table (107) pivoting on itself to remain facing the weld, the head (125) being movable in two directions so as to mate the irregularities of the weld.

5. Device according to any one of the preceding Claims, characterized in that a joint follower (119) is mounted on the measuring head (125) to adjust constantly the position of the probes (124) to a precise and constant distance from the weld bead.

6. Device according to Claim 3, characterized in that it comprises a wrist (108) oriented towards the weld bead in the direction of the bisector of the tangents of the two concurrent tubular members, the two measuring heads being mounted on plates (140) respectively parallel to the tangents to each of the tubular members and whose inclination to the bisector varies progressively with the orbital movement of the arm, the plates (140) ensuring the longitudinal movement of the probes (124) to bring them into contact with the weld bead.

7. Device according to Claim 6, characterized in that the cross-movement of the probe holder plate (125) is servo-coupled to the indications of a joint follower (119) to compensate for the irregularities of the weld, the plane of the cross-section defined by the axis of the wrist (108) and that of the plates (140) is merged with the plane perpendicular to the tangent to the weld bead at the point concerned.

8. Device according to any one of the preceding Claims, characterized in that cleaning means are mounted on at least one plate before the checking operations.

fig 1a

fig 1b

fig 2

0 056 554

fig 5

fig 3

fig 4a

fig 4b

fig 4

Fig 6

0 056 554

fig 7

0 056 554

fig 8

fig 9

fig 10 a

fig 10

fig 9 a

fig 11a

fig 11